# EUROPÄISCHE PATENTSCHRIFT

(11) **EP 3 458 310 B1**
(45) Veröffentlichungstag und Bekanntmachung des Hinweises auf die Patenterteilung: **10.03.2021**
(21) Anmeldenummer: 17751851.1
(22) Anmeldetag: 16.05.2017
(51) Int. Cl.: B60R 9/055, F04D 3/02, F04D 13/06, F04D 29/42, F04D 13/02, F04D 29/044

(54) **DACHBOX ZUM TRANSPORTIEREN VON GEPÄCK AUF DEM DACH EINES FAHRZEUGES**
ROOF BOX FOR TRANSPORTING LUGGAGE ON A VEHICLE ROOF
COFFRE DE TOIT POUR LE TRANSPORT DE BAGAGES SUR LE TOIT D'UN VÉHICULE

(30) Priorität: 17.05.2016 IT UA201622559 U
(43) Veröffentlichungstag der Anmeldung: 27.03.2019
(73) Patentinhaber: Amoriello, Roberto, 39100 Bolzano (BZ) (IT)
(72) Erfinder: Amoriello, Roberto, 39100 Bolzano (BZ) (IT)
(86) Internationale Anmeldenummer: PCT/IT2017/000098
(87) Internationale Veröffentlichungsnummer: WO 2017/199270

(56) Entgegenhaltungen:
- WO-A1-2007/078207
- DE-A1- 3 419 430
- DE-U1- 9 003 443
- GB-A- 724 687
- GB-A- 2 119 331
- US-A- 2 812 992
- US-A1- 2007 164 066

## Beschreibung

### Technisches Gebiet

Die Erfindung betrifft eine Dachbox zum Transportieren von Gepäck auf dem Dach eines Fahrzeuges gemäß dem Oberbegriff des Patentanspruches 1.

Eine erste Art von Dachbox entspricht einer traditionellen Art und umfasst: einen die Form eines Parallelepipeds aufweisenden Hohlkörper, der auf der Dachreling eines Fahrzeuges angeordnet werden kann und mit einer Öffnung versehen ist, durch welche es möglich ist Zugang zu seinem für das Gepäck bestimmten Innenraum zu haben; einen Deckel, der klappbar mit dem Hohlkörper in dessen oberem Bereich verbunden ist und von einer geschlossenen Stellung, in der er die Öffnung schließt, in eine offene Stellung, in der er die Öffnung nicht versperrt und umgekehrt, bewegbar ist; Befestigungsmittel zum Befestigen des Hohlköpers, in einer bei Bedarf lösbaren Art, an der Dachreling eines Fahrzeuges. Diese bekannte Art von Dachbox hat sich aber als untauglich erwiesen, um Gepäck auf dem Dach eines Fahrzeuges zu transportieren, weil seine quadratische Form aerodynamische Probleme verursacht. Wegen der vom Boden gerechneten großen Höhe an der sich die Öffnung des Hohlkörpers befindet, ist es außerdem schwierig das Gepäck in dem Innenraum des Hohlkörpers zu laden, sodass zu diesem Zweck es meist notwendig ist die Dachbox von dem Dach abzunehmen.

Um den aerodynamischen Problemen abzuhelfen und auch um den Zugang zu dem für das Gepäck bestimmten Raum zu erleichtern, wurde eine zweite Art von Dachbox entwickelt, die eine aerodynamischere Form aufweist, insbesondere eine Form die länger und weniger hoch ist. Diese bekannte Dachbox unterscheidet sich von der zuvor beschriebenen Dachbox dadurch dass anstelle des Hohlkörpers und des Deckels zwei Halbschalen vorgesehen sind. Diese Halbschalen sind eine über der anderen angeordnet, schließen den für das Gepäck bestimmte Raum zwischen sich ein und sind gegenseitig beweglich, um den für das Gepäck bestimmte Raum zugänglich zu machen. Insbesondere ist eine der zwei Halbschalen, die untere, an der Dachreling des Fahrzeuges befestigt, während die andere, die obere, klappbar an der festen Halbschale verbunden ist und kann daher gegenüber der festen Halbschale von einer geschlossenen Stellung, in der sie auf der darunterliegenden festen Halbschale aufliegt, in eine offene Stellung und umgekehrt geschwenkt werden. Dieser offenen Stellung ist es zu verdanken, dass der sich zwischen den beiden Halbschalen befindliche Raum zugänglich gemacht wird. Bei der Eröffnung der Dachbox wird die bewegliche Halbschale, d.h. die obere, nach oben geschwenkt, während bei der Schließung der Dachbox wird die bewegliche Halbschale, d.h. die obere, nach unten geschwenkt. Im Fall dieser zweiten Art von Dachbox beeinträchtigt die Tatsache, dass der für das Gepäck bestimmte Raum von zwei gegenseitig beweglichen Halbschalen eingeschlossen ist, eine vollständige Ausnutzung dieses Raumes, weil wenn die Dachbox offen ist die Wände die seitlich das Gepäck halten nur jene der festen Halbschale, d.h. der unteren Halbschale, sind. Auch für diese zweite Art von Dachbox sind, wegen der vom Boden gerechneten Höhe, Schwierigkeiten beim Laden vorhanden, weil, um die bewegliche sich in offener Stellung befindlichen Halbschale zu schließen, es notwendig ist zumindest auf dem Chassis des Fahrzeuges wenn gar nicht sogar auf der Sitzfläche eines Sitzes zu steigen und dann, während man indessen die Fahrzeugtüre in offener Stellung hält, sich so lang wie möglich oberhalb des Daches zu strecken, um den Rand der beweglichen Halbschale zu ergreifen und nach unten zu ziehen.

### Stand der Technik

Die Dokumente US 2812992 A**,** GB 119331 A und US 2007/164066 A1 betreffen und offenbaren eine dritte bekannte Art von Dachbox, bei der die Öffnung sich in einer seitlichen Seite des Hohlkörpers befindet. Es ist möglich von der Seite, und nicht mehr von oben wie es bei den anderen Arten von Dachbox vorgesehen ist, Zugang zu dem für das Gepäck bestimmten Innenraum zu haben, was die Zugänglichkeit zu diesem Innenraum wesentlich erhöht, weil dadurch die Höhe an die das Gepäck gehoben werden muss wesentlich kleiner ist und es außerdem möglich ist in diesen Innenraum hineinzuschauen, um sich zu vergewissern wieviel Platz noch übrig ist.

Die seitliche Seite in der sich die Öffnung befindet, ist eine seitliche Längsseite des Hohlkörpers. In diesem Fall kann die Klappe groß sein, was die Zugänglichkeit zu dem Innenraum des Hohlkörpers noch mehr erhöht ohne aber dabei die vollständige Ausnutzung des Innenraums zu beeinträchtigen.

Die Dachbox des o.g. Dokuments US 2812992 A weist auch eine Anzahl von sich im Innere des Hohlkörpers befindlichen Körpern auf, auf denen in abnehmbarer Weise Behälter für das Gepäck gelegt werden können. Da diese Körper sich vom Boden des Hohlkörpers nach oben erheben und ins Innere des Hohlkörpers ragen, kann man das Gepäck nicht unmittelbar auf den Boden des Hohlkörpers legen. Das Dokument DE 3419430 A1 offenbart eine weitere bekannte Dachbox der o.g. dritten Art, bei der gezeigt wird, dass die Öffnung sich auch in einer seitlichen Querseite des Hohlkörpers befinden kann. Dann ist es möglich von der Seite und in bequemer Weise in die Dachbox auch Gegenstände hineinzulegen, die so lang wie die Dachbox sind.

### Darstellung der Erfindung

Ausgehend aus dem erläuterten Zusammenhang besteht die der vorliegenden Erfindung zugrunde liegende Aufgabe in der Verbesserung einer Dachbox der eingangs erwähnten Art, d.h. einer Dachbox gemäß dem Oberbegriff des Patentanspruches 1, damit sie in besonders bequemer und vorteilhafter Weise benutzt werden kann, insbesondere weil der für das Gepäck bestimmte Raum leicht zugänglich ist und weil der für das Gepäck bestimmte Raum vollständig ausnutzbar ist.

Erfindungsgemäß wird diese Aufgabe von einer die im Oberbegriff des Patentanspruches 1 angegebenen Merkmale aufweisenden Dachbox zum Transportieren von Gepäck auf dem Dach eines Fahrzeuges gelöst, dadurch dass sie zusätzlich auch die in dem kennzeichnenden Teil des Patentanspruches 1 angegebenen Merkmale aufweist.

Es ist nun möglich den Innenraum des Hohlkörpers in spezifische Bereiche zu unterteilen, zum Beispiel um in diesen spezifischen Bereichen Gepäck zu laden das spezifische Merkmale aufweist.

In den Patentansprüchen 2 und 3 sind jeweils Merkmale beansprucht, der es zu verdanken ist dass es möglich ist den Innenraum des Hohlkörpers in zwei verschiedene Innenkammern zu unterteilen, von denen eine für das Gepäck bestimmt ist das besonders lang ist. Im Fall des Patentanspruches 3 ist es der zusammenrollbaren Gruppe von Leisten, die im Anspruch vorgesehen ist, zu verdanken dass es besonders einfach ist von der Situation, in der zwei Innenkammern für das Gepäck vorgesehen sind, zu der allgemeinen Situation, in der der gesamte Innenraum eine einzige Innenkammer für das Gepäck bildet, und umgekehrt, zu übergehen.

Weist die Dachbox, die in dem Patentanspruch 4 beanspruchten Merkmale auf, dann kann man, wenn man die weitere Klappe öffnet, durch die Öffnung Zugang zu dem Boden des Hohlkörpers haben. Die seitliche Seite in der sich die weitere Öffnung befindet, ist zweckmäßigerweise, wie man in dem Patentanspruch 5 vorgesehen hat, die Querseite die in Richtung zu der Hinterseite des Fahrzeuges gerichtet ist, damit diese Öffnung sich in einer geschützten Position befindet und nicht von der Luft unmittelbar getroffen wird.

In dem Patentanspruch 6 wird eine einfache und kostengünstige Ausführungsform der Befestigungsmittel zum Befestigen des Hohlköpers, in einer bei Bedarf lösbarer Art, an der Dachreling eines Fahrzeuges, beansprucht.

Wenn die Dachbox die in dem Patentanspruch 7 beanspruchten Merkmale aufweist, dann weist sie eine aerodynamische Form auf, sodass die von ihrem Transport auf dem Dach eines Fahrzeuges verursachten Probleme in der Aerodynamik möglichst klein sind.

Die Dachbox kann schließlich, gemäß Patentanspruch 8, eine Vorrichtung zur seitlichen Eindämmung umfassen, die auf der oberen Oberfläche des Hohlkörpers angeordnet ist und sich längs des Umfangs dieser Oberfläche erstreckt und daher die Anordnung von weiterem Gepäck auf der Oberfläche des Hohlkörpers ermöglicht. Eine solche Vorrichtung zur seitlichen Eindämmung kann außerdem benutzt werden, um an ihr die Riemen zu verankern, mit denen man das weitere Gepäck anbindet.

### Kurze Beschreibung der Zeichnungen

Weitere Vorteile und Merkmale der Erfindung werden aus der folgenden Beschreibung von Ausführungsbeispiele der erfindungsgemäßen Dachbox zum Transportieren von Gepäck auf dem Dach eines Fahrzeuges deutlicher sein, die rein beispielhaft und ungefähr, aber bestimmt nicht in einschränkender Weise anhand der beigelegten Zeichnungen erläutert werden. In den Zeichnungen zeigen:
die **Fig. 1** schematisch und perspektivisch die erfindungsgemäße Dachbox wenn sie auf der Dachreling eines Fahrzeugs angebracht ist;
die **Fig. 2** schematisch und perspektivisch die Dachbox der Fig. 1, wobei die Klappe und die weitere Klappe des Hohlkörpers in ihrer offenen Stellungen dargestellt wurden und wobei im Innere des Hohlkörpers sowohl einige flache Körper als auch ein sich ununterbrochen erstreckender Vorsprung auf dem einige flache Körper liegen, in unterbrochener Weise dargestellt wurden;
die **Fig. 3** schematisch und perspektivisch eine Anzahl von flachen Körper, die so sind, wie jene die in der Fig. 2 dargestellt sind;
die **Fig. 4** schematisch und perspektivisch die Dachbox der Fig. 1 und 2, wobei man verzichtet hat das Fahrzeug darzustellen und wobei im Innere des Hohlkörpers sowohl einige flache Körper als auch den sich ununterbrochen erstreckenden Vorsprung in unterbrochener Weise dargestellt wurden, sodass man die darunterliegenden Befestigungsmittel sehen kann;
die **Fig. 5** schematisch und perspektivisch eine Vergrößerung aus der Fig. 4;
die **Fig. 6** schematisch und perspektivisch und alleine die erfindungsgemäße Dachbox, wobei man auch die Vorrichtung zur seitlichen Eindämmung dargestellt hat;
die **Fig. 7** schematisch und perspektivisch die erfindungsgemäße Dachbox, wobei die Klappe und die weitere Klappe des Hohlkörpers in ihrer offenen Stellungen dargestellt wurden und wobei im Innere des Hohlkörpers sowohl eine zusammenrollbare und/oder abrollbare Gruppe von Leisten als auch ein sich ununterbrochen erstreckender Vorsprung auf dem die Gruppe von Leisten aufliegt, in unterbrochener Weise dargestellt wurden;
die **Fig. 8** schematisch und perspektivisch eine zusammenrollbare und/oder abrollbare Gruppe von Leisten wie jene die in der Fig. 7 dargestellt ist.

### Bester Weg zur Ausführung der Erfindung

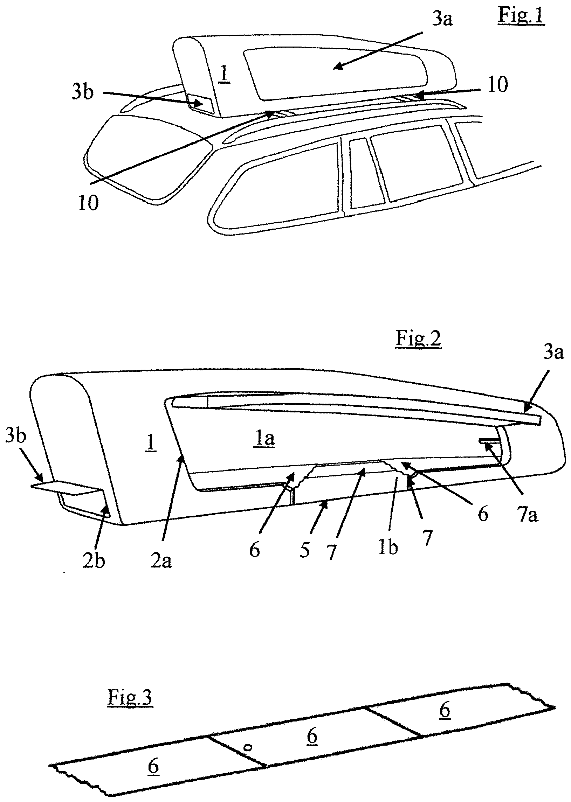

In den Figuren wurde eine Dachbox zum Transportieren von Gepäck auf dem Dach eines Fahrzeuges dargestellt. Die Dachbox umfasst einen Hohlkörper 1, eine Klappe 3a und Befestigungsmittel. Die Befestigungsmittel dienen zum Befestigen des Hohlköpers 1, in einer bei Bedarf lösbarer Art, an der Dachreling 10 eines Fahrzeuges. Der Hohlkörper 1 kann, wie aus Figur 1 hervorgeht, auf der Dachreling 10 eines Fahrzeuges angeordnet werden und ist mit einer Öffnung 2a versehen ist, durch welche es möglich ist Zugang zu seinem für das Gepäck bestimmten Innenraum zu haben. Bezugnehmend auf die Klappe 3a, sie ist schwenkbar mit dem Hohlkörper 1 verbunden und kann von einer geschlossenen Stellung, in der sie 3a die Öffnung 2a schließt, in eine offene Stellung, in der sie 3a die Öffnung 2a nicht versperrt und umgekehrt, gebracht werden.

In den Figuren 2, 4 und 7 wurde die Klappe 3a in der offenen Stellung dargestellt und man kann den Innenraum des Hohlkörpers 1, d.h. den für die Aufnahme des Gepäcks bestimmten Raum, sehen.

Wie gerade aus den Figuren 2, 4 und 7 hervorgeht, befindet sich die Öffnung 2a in einer seitlichen Seite des Hohlkörpers 1, insbesondere in einer seitlichen Längsseite des Hohlkörpers 1. An dieser seitlichen Seite, insbesondere seitlichen Längsseite, des Hohlkörpers 1 ist die Klappe 3a schwenkbar mit dem Hohlkörper 1 verbunden.

In den Figuren 2, 4 und 7 kann man außerdem sehen, dass die Dachbox eine weitere Klappe 3b umfasst. Diese weitere Klappe 3b ist einer weiteren Öffnung 2b zugeordnet, die in einer Querseite des Hohlkörpers 1 vorgesehen ist, insbesondere die Querseite die in Richtung zu der Hinterseite des Fahrzeuges 1 gerichtet ist. An dieser Querseite, insbesondere hinterer Querseite, des Hohlkörpers 1 ist die weitere Klappe 3b schwenkbar mit dem Hohlkörper 1 verbunden. Die weitere Klappe kann von einer geschlossenen Stellung, in der sie 3b die weitere Öffnung 2b schließt, in eine offene Stellung, die in den Figuren 2, 4 und 7 dargestellt ist und in der sie 3b die weitere Öffnung 2b nicht versperrt, und umgekehrt, gebracht werden.

Wie man in den Figuren 2, 4 und 7 dargestellt hat, befindet sich die weitere Öffnung 2b in der Nähe des Bodens 5 des Hohlkörpers 1. Auf dieser Weise wenn man die weitere Klappe 3b öffnet, kann man durch die Öffnung 2b Zugang zu dem Boden 5 des Hohlköpers 1 haben.

Die Dachbox umfasst außerdem eine Anzahl von flachen Körper 6,6a, die dazu geeignet sind innerhalb des Hohlkörpers 1 angeordnet zu werden, um den Innenraum des Hohlkörpers 1 zu unterteilen. Zu diesem Zweck ist innerhalb des Hohlkörpers 1 eine Anzahl von Vorsprüngen 7,7a vorhanden, die 7,7a sich längs der den Innenraum des Hohlkörpers 1 abgrenzenden inneren Seitenwänden erstrecken. Diese Vorsprünge 7,7a bilden Auflagen, auf denen die flachen Körper 6;6,6a in abnehmbarer Weise gelegt werden können, um den Innenraum des Hohlkörpers 1 zu unterteilen.

Einer 7 dieser Vorsprünge 7,7a erstreckt sich ununterbrochen auf gleicher vom Boden 5 gerechneten Höhe, während die anderen Vorsprünge 7a derart angeordnet sind, dass sie die Bildung mehrerer Bretter ermöglichen, die auch ein über dem anderen gebildet werden können und verschiedene Größen besitzen.

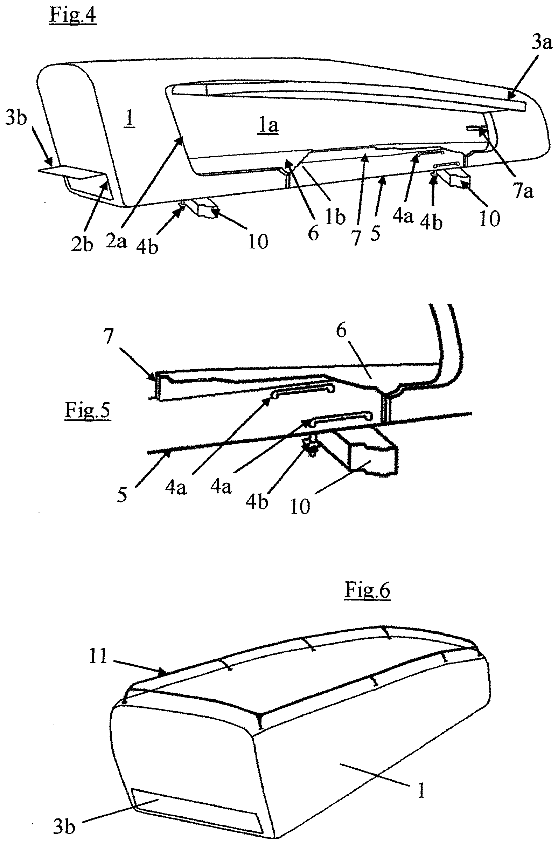

In einem ersten in den Figuren 2 und 4 dargestellten Ausführungsbeispiel sind nur flache Körper 6 vorgesehen, die als Platten ausgebildet sind. Die auf dem Vorsprung 7 aufliegenden Platten 6 unterteilen den Innenraum des Hohlkörpers 1 in zwei verschiedene Innenkammern 1a, 1b, während die Platten 6 die auf den Vorsprüngen 7a aufliegen die Bretter bilden. In den Figuren 2 und 4 wurden die Bretter nicht dargestellt, um die Darstellung zu vereinfachen, und in der Figur 3 ist zum Beispiel eine Anzahl von Platten 6 zu sehen, wie jene die man, eine neben der anderen, auf dem Vorsprung 7 legen kann. In den Figuren 2 und 4 wurden die Platten 6 und der ununterbrochene Vorsprung 7 in teilweise unterbrochener Weise dargestellt, um die darunterliegende Innenkammer 1b zu zeigen, die aus dem sich zwischen den Platten 6 und dem Boden 5 des Hohlkörpers 1 befindlichen Raum gebildet ist. Mittels der Platten 6 und des Vorsprungs 7 ist es in der Praxis möglich einen doppelten Boden zu bilden, der die Innenkammer 1b nach oben abgrenzt. Wenn man die weitere Klappe 3b öffnet, wird die weitere Öffnung 2b freigelassen, die die Öffnung darstellt, um von außen Zugang zu der Innenkammer 1b zu haben.

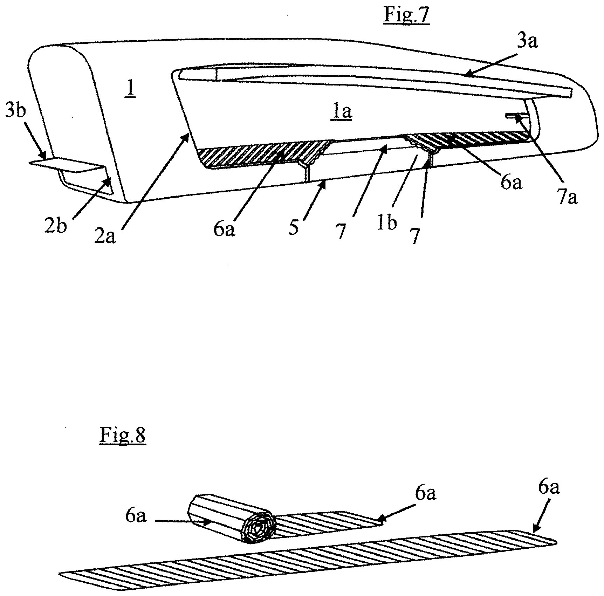

In einem zweiten in der Figur 7 dargestellten Ausführungsbeispiel sind auch flache Körper 6a vorgesehen die als Leisten ausgebildet sind, welche mittels biegsamer Elemente eine an der anderen verbunden sind, sodass sie insgesamt eine zusammenrollbare und/oder abrollbare Einheit bilden. Diese Leisteneinheit 6a ist zum Beispiel in der Figur 8 dargestellt. In diesem Ausführungsbeispiel werden auf den Vorsprüngen 7a nur Platten 6 gelegt, um Bretter zu bilden die aber, um die Zeichnung zu vereinfachen, in der Figur 7 nicht dargestellt wurden, während die Unterteilung des Innenraumes in zwei Innenkammern 1a und 1b dadurch erreicht wird dass auf dem ununterbrochenen Vorsprung 7 nach ihrem Abrollen die Gruppe von Leisten 6a aufliegt.

In der Figur 7 wurde die Gruppe von Leisten 6a, ähnlich wie die Platten 6 in den Figuren 2 und 4, in teilweise unterbrochener Weise dargestellt, um die darunterliegende Innenkammer 1b zu zeigen, die aus dem sich zwischen der Gruppe von Leisten 6a und dem Boden 5 des Hohlkörpers 1 befindlichen Raum gebildet ist. Mittels der Gruppe von Leisten 6a und des Vorsprungs 7 ist es in der Praxis möglich einen doppelten Boden zu bilden, der die Innenkammer 1b nach oben abgrenzt. Wenn man die weitere Klappe 3b öffnet, wird die weitere Öffnung 2b freigelassen, die die Öffnung darstellt, um von außen Zugang zu der Innenkammer 1b zu haben.

Es versteht sich von selbst dass es nicht zwingend ist den Innenraum des Hohlkörpers 1 zu unterteilen, d.h. es ist nicht zwingend die flachen Körper 6 und/oder 6a innerhalb des Innenraumes des Hohlkörpers 1 anzuordnen. Der Innenraum des Hohlkörpers 1 kann ungeteilt bleiben und in diesem Fall wird das Gepäck unmittelbar auf dem Boden 5 aufliegen.

Bezugnehmend auf die Befestigungsmittel mit denen der Hohlkörper 1 an der Dachreling 10 eines Fahrzeuges befestigt ist, können sie zum Beispiel, wie man in den Figuren 4 und 5 dargestellt hat, aus einer Anzahl von U-förmigen Elementen 4a und einer Anzahl von kleinen Platten 4b bestehen. Jedes U-förmige Element 4a schließt in seinem Innere einen Stab der Dachreling 10 des Fahrzeuges ein und ist auf seiner offenen Seite von einer jeweiligen kleinen Platte 4b geschlossen, die mit ihm 4a durch Schrauben verbunden ist, wie man insbesondere in der Figur 5 sehen kann.

Schließlich, wie zum Beispiel aus den Figuren 2, 4 und 7 hervorgeht, ist die Form des Hohlkörpers 1 keilähnlich, d.h. sie ist aerodynamisch.

In der Figur 6 kann man sehen, dass die Dachbox eine Vorrichtung zur seitlichen Eindämmung 11 umfasst, die auf der oberen Oberfläche des Hohlkörpers 1 angeordnet ist und sich längs des Umfangs dieser Oberfläche erstreckt. Auf der oberen Oberfläche des Hohlkörpers 1 kann, innerhalb des Raumes der seitlich von dieser Vorrichtung zur seitlichen Eindämmung 11 abgegrenzt wird, weiteres Gepäck angeordnet werden. Die Vorrichtung zur seitlichen Eindämmung 1 verhindert dass das weitere Gepäck gleitet und von dem Hohlkörpers 1 herab fällt und sie 11 kann zum Beispiel, wie Figur 6 zeigt, aus längs des Umfangs des Hohlkörpers 1 verteilten und mittels Geländer miteinander verbundenen Stützen, bestehen, damit eine einzige Konstruktion gebildet wird an der zum Beispiel die Riemen zum Anbinden des weiteren Gepäcks verankert werden können.

Die Arbeitsweise der erfindungsgemäßen Dachbox ist wie folgt.

Die Dachbox wird geöffnet indem die Klappe 3a nach oben geschwenkt wird, um sie in ihre offene Stellung zu bringen. Auf dieser Weise wird der Innenraum des Hohlkörpers 1 zugänglich und in der Mehrzahl der Fälle bleiben nur das Einlegen des Gepäck in diesen Innenraum und das Schließen der Dachbox, indem die Klappe 3a nach unten geschwenkt wird um sie wieder in ihre geschlossene Stellung zu bringen, übrig.

Falls es spezifisches Gepäck gibt, das getrennt vom übrigen Gepäck transportiert werden muss, kann man auf den dafür bestimmten Vorsprüngen 7a einen oder mehrere flache Körper 6 legen, um ein oder mehrere Bretter für dieses spezifische Gepäck zu bilden.

Falls es spezifisches besonders langes Gepäck gibt, kann man den Innenraum des Hohlkörpers 1 in die zwei verschiedene Innenkammern 1a, 1b unterteilen. Das kann entweder in der in den Figuren 2 und 4 dargestellten Weise mittels der Platten 6 und des ununterbrochenen Vorsprungs 7 oder in der in der Figur 7 dargestellten Weise mittels der Gruppe von Leisten 6a und des ununterbrochenen Vorsprungs 7 geschehen. Um dieses langes Gepäck in die Innenkammer 1b hineinzulegen, wird die weitere Klappe 3b nach oben geschwenkt, um sie in ihre offene Stellung zu bringen die durch die weitere Öffnung 2b einen Zugang zu der Innenkammer 1b ermöglicht, während das übrige Gepäck durch die Öffnung 2a in die Innenkammer 1a hineingelegt wird. Das lange Gepäck wird auf dem Boden 5 des Hohlkörpers 1 aufliegen, ohne dass es in Berührung mit dem übrigen Gepäck kommt, das entweder auf den Brettern aufliegen wird, die von den auf den Vorsprüngen 7a aufliegenden Platten gebildet sind, oder auf dem doppelten Boden aufliegen wird. Der doppelte Boden wird in einem Ausführungsbeispiel von den auf dem ununterbrochenen Vorsprung 7 aufliegenden Platten 6 gebildet und in einem anderen Ausführungsbeispiel von der auf dem ununterbrochenen Vorsprung 7 aufliegenden Gruppe von Leisten 6a gebildet. Falls es nützlich ist, kann man auch weiteres Gepäck auf dem Hohlkörper 1 und innerhalb der Vorrichtung zur seitlichen Eindämmung 11 laden.

## Patentansprüche

1. Dachbox zum Transportieren von Gepäck auf dem Dach eines Fahrzeuges, umfassend:
- einen Hohlkörper (1), der auf der Dachreling (10) eines Fahrzeuges angeordnet werden kann und mit einer Öffnung (2a) und einer weiteren Öffnung (2b) versehen ist, durch welche es möglich ist Zugang zu seinem für das Gepäck bestimmten Innenraum zu haben, wobei die Öffnung (2a) sich in einer seitlichen Längsseite des Hohlkörpers (1) befindet und die weitere Öffnung (2b) sich in einer seitlichen Querseite des Hohlkörpers (1) befindet;
- eine Klappe (3a), die an besagter seitlicher Längsseite schwenkbar mit dem Hohlkörper (1) verbunden ist und von einer geschlossenen Stellung, in der sie (3a) die Öffnung (2a) schließt, in eine offene Stellung, in der sie (3a) die Öffnung (2a) nicht versperrt und umgekehrt, schwenkbar ist;
- Befestigungsmittel zum Befestigen des Hohlköpers (1), in einer bei Bedarf lösbarer Art, an der Dachreling (10) eines Fahrzeuges;
- eine Anzahl von Vorsprüngen (7,7a), die (7,7a) im Innere des Hohlkörpers (1) vorhanden sind und Auflagen bilden, auf denen die flachen Körper (6;6,6a) in abnehmbarer Weise gelegt werden können, **dadurch gekennzeichnet, dass**
- eine weitere Klappe (3b) vorgesehen ist, die an einer seitlichen Querseite schwenkbar mit dem Hohlkörper (1) verbunden ist und von einer geschlossenen Stellung, in der sie (3b) die weitere Öffnung (2b) schließt, in eine offene Stellung, in der sie (3b) die weitere Öffnung (2b) nicht versperrt, und umgekehrt, schwenkbar ist;
- dass flache Körper (6,6a) zum Unterteilen des Innenraums des Hohlkörpers (1) vorgesehen sind; dass die Vorsprünge (7,7a) sich längs
der den Innenraum des Hohlkörpers (1) abgrenzenden inneren Seitenwänden erstrecken und dass einer (7) der Vorsprünge (7,7a) sich ununterbrochen auf gleicher vom Boden (5) gerechneten Höhe erstreckt.

2. Dachbox nach Anspruch 1, **dadurch gekennzeichnet dass** besagte flache Körper (6) Platten sind und dass die auf dem Vorsprung (7) gelegten Platten (6) den Innenraum des Hohlkörpers (1) in zwei verschiedene Innenkammern (1a,1b) unterteilen, wobei die weitere Öffnung (2b) die Öffnung darstellt, um von außen Zugang zu der Innenkammer (1b) zu haben.

3. Dachbox nach Anspruch 1, **dadurch gekennzeichnet dass** besagte flache Körper (6) Platten sind und besagte flache Körper (6a) Leisten sind, welche (6a) mittels biegsamer Elemente eine mit der anderen verbunden sind, sodass sie insgesamt eine zusammenrollbare und/oder abrollbare Gruppe bilden und **dass** die Gruppe von Leisten (6a), die nach ihrem Abrollen auf dem Vorsprung (7) aufliegt, den Innenraum des Hohlkörpers (1) in zwei verschiedene Innenkammern (1a,1b) unterteilt, wobei die weitere Öffnung (2b) die Öffnung darstellt, um von außen Zugang zu der Innenkammer (1b) zu haben.

4. Dachbox nach Anspruch 2 oder 3, **dadurch gekennzeichnet dass** und **dass** die weitere Öffnung (2b) sich in der Nähe des Bodens (5) des Hohlkörpers (1) befindet.

5. Dachbox nach einem der vorhergehenden Ansprüche, **dadurch gekennzeichnet dass** besagte Querseite, in der sich die weitere Öffnung (2b) befindet, die Querseite ist die in Richtung zu der Hinterseite des Fahrzeuges (1) gerichtet ist.

6. Dachbox nach einem der vorhergehenden Ansprüche, **dadurch gekennzeichnet dass** die Befestigungsmittel zum Befestigen des Hohlköpers (1), in einer bei Bedarf lösbarer Art, an der Dachreling (10) eines Fahrzeuges aus einer Anzahl von U-förmigen Elementen (4a) und einer Anzahl von kleinen Platten (4b) bestehen, wobei jedes U-förmige Element (4a) in seinem Innere einen Stab der Dachreling (10) des Fahrzeuges einschließt und auf seiner offenen Seite von einer jeweiligen kleinen Platte (4b) geschlossen ist, die durch Schrauben mit ihm (4a) verbunden ist.

7. Dachbox nach einem der vorhergehenden Ansprüche, **dadurch gekennzeichnet dass** die Form des Hohlkörpers (1) keilähnlich ist.

8. Dachbox nach einem der vorhergehenden Ansprüche, **dadurch gekennzeichnet dass** sie eine Vorrichtung zur seitlichen Eindämmung (11) umfasst, die auf der oberen Oberfläche des Hohlkörpers (1) angeordnet ist und sich längs des Umfangs dieser Oberfläche erstreckt.

## Claims

1. Roof box for transporting luggage on a vehicle roof, comprising:
- a hollow body (1), which can be positioned on the roof racks (10) of a vehicle and is provided with an opening (2a) and a further opening (2b), through which it is possible to have access to its interior intended for the luggage, wherein the opening (2a) is located in a lateral longitudinal side of the hollow body (1) and the further opening (2b) is located in a lateral transverse side of the hollow body (1);
- a hatch (3a), which is hinged on the aforementioned lateral longitudinal side to the hollow body (1) and is rotatable from a closed position, in which it (3a) closes the opening (2a), to an open position, in which it (3a) does not obstruct the opening (2a), and vice-versa;
- fastening means for fastening the hollow body (1), in a manner that can be detached if required, to the roof racks (10) of a vehicle;
- a number of projections (7, 7a) which (7, 7a) are present in the inner part of the hollow body (1) and form supports on which the flat bodies (6; 6, 6a) can be placed in a removable manner; **characterized in that** it provides
- a further hatch (3b), which is hinged to the hollow body (1) on a lateral transverse side, and is rotatable from a closed position, in which it (3b) closes the further opening (2b), into an open position, in which it (3b) does not obstruct the further opening (2b), and vice-versa;
- flat bodies (6,6a) for dividing the interior of the hollow body (1);
- **that** the projections (7, 7a), extend along the inner side walls delimiting the interior of the hollow body (1), and
- **that** one (7) of the projections (7, 7a) extends continuously at the same height as calculated by the floor (5).

2. Roof box according to claim 1, **characterized in that** aforementioned flat bodies (6) are plates and **that** the plates (6) placed on the projection (7) divide the interior of the hollow body (1) into two different inner chambers (1a, 1b), wherein the further opening (2b) represents the opening in order to have access from the outside to the inner chamber (1b).

3. Roof box according to claim 1, **characterized in that** aforementioned flat bodies (6) are plates and aforementioned flat bodies (6a) are laths, which (6a) are connected to the other by means of flexible elements, so that they form together a group that can be rolled up and/or rolled down, and **that** the group of laths (6a), which rests on the projection (7) after rolling, divides the interior of the hollow body (1) into two different inner chambers (1a, 1b), wherein the further opening (2b) represents the opening in order to have external access to the inner chamber (1b).

4. Roof box according to claim 2 or 3, **characterized in that** a further opening (2b) is located in the vicinity of the floor (5) of the hollow body (1).

5. Roof box according to one of the preceding claims, **characterized in that** aforementioned transverse side, in which the further opening (2b) is located, is the transverse side, which is directed in the direction of the rear side of the vehicle (1).

6. Roof box according to one of the preceding claims, **characterized in that** the fastening means for fastening the hollow body (1) to the roof racks (10) of a vehicle, in a manner that can be detached if required, consist of a plurality of U-shaped elements (4a) and a plurality of small plates (4b), wherein each U-shaped element (4a) encloses in its interior a bar of the roof racks (10) of the vehicle, and on its open side it is closed by a respective small plate (4b) which is connected to it (4a) by bolts.

7. Roof box according to one of the preceding claims, **characterized in that** the shape of the hollow body (1) is wedge-like.

8. Roof box according to one of the preceding claims, **characterized in that** it includes a device for lateral containment (11), which is arranged on the upper surface of the hollow body (1) and extends along the circumference of this surface.

## Revendications

1. Coffre de toit pour le transport des bagages sur le toit d'un véhicule, comprenant:
- un corps creux (1), qui peut être placé sur les barres de toit (10) d'un véhicule et est muni d'une ouverture (2a) et d'une ouverture supplémentaire (2b) par laquelle il est possible d'accéder à son espace intérieur destiné aux bagages, tandis que l'ouverture (2a) est située sur le côté latéral longitudinal du corps creux (1) et l'ouverture supplémentaire (2b) est située sur le côté transversal du corps creux (1);
- une porte (3a) à charnières que est attachée sur le côté latéral longitudinal susmentionné au corps creux (1) et qu'est pivotant à partir d'une position fermée, dans laquelle elle (3a) ferme l'ouverture (2a), dans une position ouverte où elle (3a) n'obstrue pas l'ouverture (2a), et vice versa;
- des moyens de fixation permettant de fixer, en cas de besoin, de manière amovible, le corps creux (1) aux barres de toit (10) d'un véhicule;
- un grand nombre de rebords (7,7a), qui (7,7a) se trouvent à l'intérieur du corps creux (1) et forment des appuis sur lesquels les corps plats (6;6,6a) peuvent être posés de manière amovible; **caractérisée par le fait qu'il** comporte
- une porte supplémentaire (3b) à charnières que est attachée sur le côté transversal au corps creux (1) et qui est pivotant à partir d'une position fermée, dans laquelle elle (3b) ferme l'ouverture ultérieure (2b), dans une position ouverte, dans laquelle elle (3b) n'obstrue pas l'ouverture ultérieure (2b), et vice versa;
- corps plats (6,6a) pour subdiviser l'intérieur du corps creux (1);
- **que** les saillies (7,7a) s'étendent le long des parois latérales intérieures délimitant l'espace intérieur du corps creux (1) et
- **qu**'une (7) des saillies (7,7a) s'étend de façon continue à la même hauteur calculée au-dessus du fond (5).

2. Coffre de toit selon la revendication 1, **caractérisé par le fait que les** corps plats (6) mentionnés sont des plaques et **que** les plaques (6) posées sur le rebord (7) divisent l'espace intérieur du corps creux (1) en deux chambres intérieures distinctes (1a,1b), tandit que l'ouverture supplémentaire (2b) représente l'ouverture pour accéder de l'extérieur à la chambre intérieure (1b).

3. Coffre de toit selon la revendication 1, **caractérisé par le fait que** ces corps plats (6) mentionnés sont des plaques et ces corps plats (6a) mentionnés sont des lattes qui (6a) sont reliés l'un à l'autre par des éléments souples de manière à former en tout un ensemble enroulable et/ou déroulable et **que** l'ensemble des lattes (6a), que pose sur le rebord (7) après avoir été déroulé, divise l'espace intérieur du corps creux (1) dans deux chambres intérieures distinctes (1a,1b), tandis que l'ouverture supplémentaire (2b) représente l'ouverture pour accéder de l'extérieur à la chambre intérieure (1b).

4. Coffre de toit selon la revendication 2 ou 3, **caractérisé par le fait que** l'ouverture supplémentaire (2b)est placée à proximité du fond (5) du corps creux (1).

5. Coffre de toit selon une des revendication précédentes, **caractérisé par le fait que ce** côté transversal dans lequel l'ouverture ultérieure est disposée (2b) est le côté transversal tourné en direction vers la face arrière du véhicule (1).

6. Coffre de toit selon une des revendications précédentes, **caractérisé par le fait que** les moyens de fixation pour fixer, que est déblocable si nécessaire, le corps creux (1) aux barres de toit (10) d'un véhicule sont constitués d'une pluralité d'éléments en U (4a) et d'une pluralité de plaquettes (4b), danse laquelle chaque élément en U (4a) renferme à l'intérieur une barre de toit (10) de la voiture et est fermé par une petite plaquette respective (4b) sur le côté ouvert auquel elle est attachée (4a) avec des boulons.

7. Coffre de toit selon une des revendications précédentes, **caractérisé par le fait que** la forme du corps creux (1) est à coin.

8. Coffre de toit selon une des revendications précédentes, **caractérisé par le fait qu'**il comprend une structure de confinement latéral (11), qui est disposée sur la surface supérieure du corps creux (1) et s'étend le long du périmètre de cette surface.
